# EUROPEAN PATENT SPECIFICATION

(11) **EP 1 625 323 B1**
(45) Date of publication and mention of the grant of the patent: **25.08.2010**
(21) Application number: 04726204.3
(22) Date of filing: 07.04.2004
(51) Int. Cl.: F16L 55/165

(54) **LINING DUCTS**
VERKLEIDUNG VON LEITUNGEN
REVETEMENT INTERIEUR DE CANALISATIONS

(30) Priority: 12.04.2003 GB 0308529
(43) Date of publication of application: 15.02.2006
(73) Proprietor: SEVERN TRENT WATER LIMITED, Birmingham, B26 3PU (GB); YORKSHIRE WATER SERVICES LIMITED, Bradford, West Yorkshire BD6 2ZS (GB); NCC Danmark A/S, 2900 Hellerup (DK); ANGLIAN WATER SERVICES LTD., Huntingdon, Cambs. PE29 3NZ (GB); Euro-Projects (LTTC) Limited, Loughborough, Leicestershire LE11 0AH (GB)
(72) Inventor: WEATHERBY, Nicholas Leo, Nottingham NG2 7EJ (GB); TURNER, Matthew Richard, Nottingham NG2 5GW (GB)
(74) Representative: Makovski, Priscilla Mary
(86) International application number: PCT/GB2004/001537
(87) International publication number: WO 2004/090411

(56) References cited:
- WO-A-02/25156
- US-A- 5 244 624
- US-A- 5 924 743

## Description

This invention relates to apparatus for lining ducts with fibre-reinforced thermoplastics composite materials.

The term 'duct' as used herein includes pipes, tubes and conduits, whether for conveying fluids (for example, water mains pipes or sewers) or for other purposes.

The ducts used for gas and water supplies are often of cast iron, and failure due to corrosion is becoming an increasing problem as existing systems age. It is, for example, estimated that over half of all water mains in the UK have been in service for more than 40 years, and that 20% have been in service for more than 80 years. Sewer ducts, which are generally of brickwork or concrete, can also fail due to structural deterioration of the materials. It is generally cheaper and causes less disruption if such ducts are rehabilitated by lining rather than removed and replaced. Various different techniques for lining existing ducts are known, but there is a demand for more efficient rehabilitation techniques.

Thus, WO 98/26919 shows a method of lining a duct, using a flexible liner which includes a layer of composite material made of thermoplastics and reinforcing fibres. The liner is introduced into the duct, heated to cause the thermoplastics fibres to melt, and then pressure is applied to mix the molten plastic and reinforcing fibres intimately, and to press the liner into contact with the duct, where it cools and consolidates into a structural member. The heating and application of pressure is performed by a robotic device commonly known as a pig. The pig passes along the inside of the liner, opening it up. The pig has means for heating the liner, and consolidation means which press the heated liner against the duct, where it cools and consolidates. One problem in designing the pig is to ensure that it provides sufficiently uniform heating of the liner to ensure uniformity of the final structural liner member.

We have found that heating by conduction alone is not suitable for a liner described in WO 98/26919, which includes a layer of composite material comprising thermoplastics and reinforcing fibres. The composite material has air pockets throughout its thickness, and so cannot be heated uniformly to the melting point of the thermoplastics by conduction.

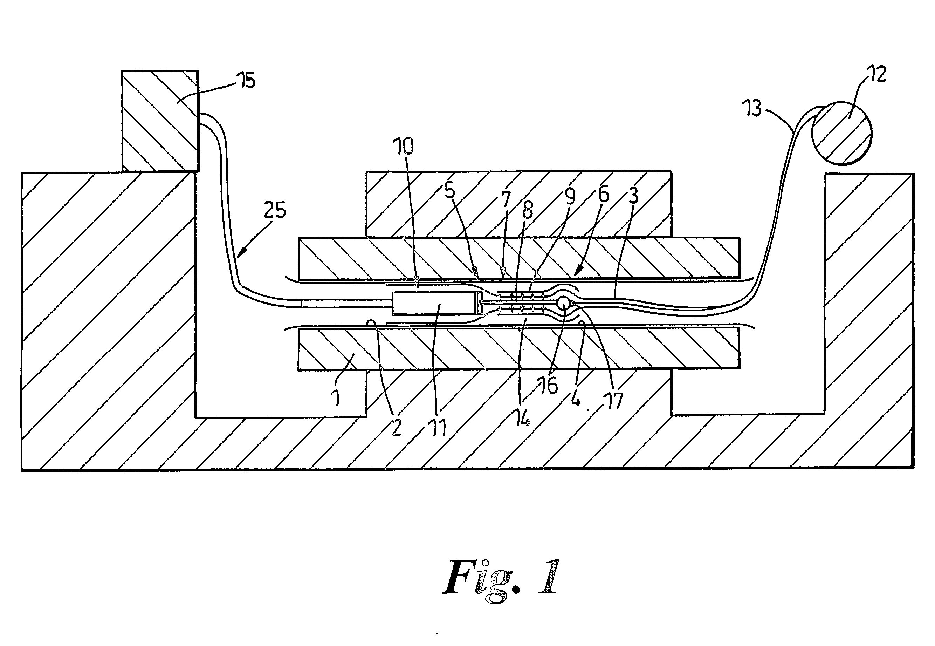

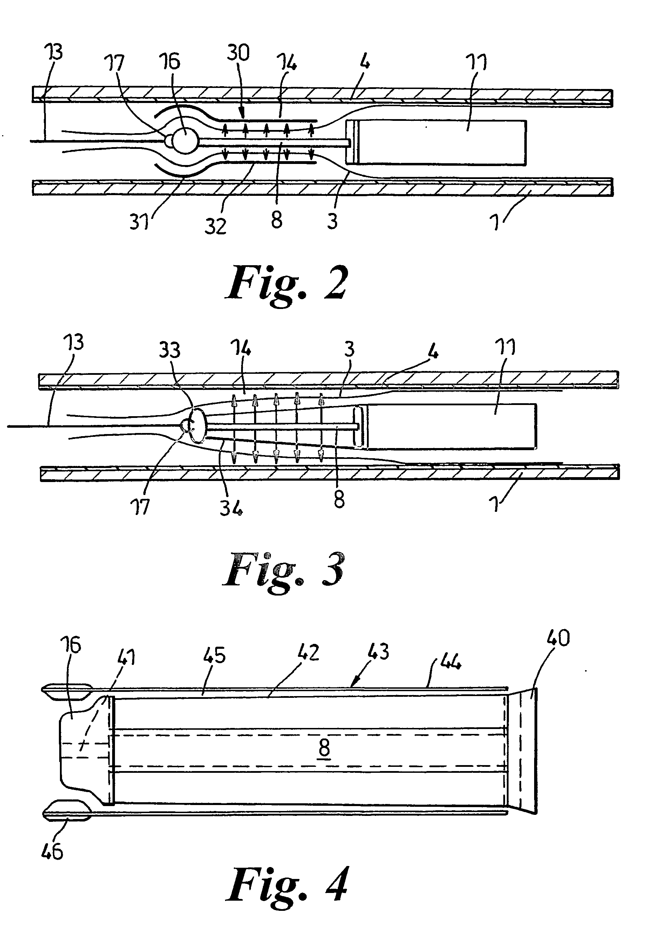

WO 02/25156 describes a development of apparatus for lining ducts with a liner including a layer of fibre reinforced thermoplastics. Figure 1 shows apparatus having a central heating element attached between a front nose portion and an inflatable bag portion. An annual support means is provided around the nose and heating element to guide the liner and maintain an air gap to aid uniform heating of the layer of fibre-reinforced thermoplastics. It was found that the support means was not essential as the hot air pressure from the heating means appeared to maintain an adequate air gap, as shown in Figure 3.

Providing the air gap on the side (inside or outside) of the layer of composite material opposite the heating means assists in the uniform heating of the layer, as it will not be in contact with the duct or part of the apparatus which can adversely affect heating. The air gap is on the low pressure side of the layer to provide a well-defined exit path for the pressurised hot gas through the thickness of the composite layer. The pressure differential across the layer drives the hot gas through in a uniform manner. The hot gas replaces the air in the pockets in the layer of composite material, which contributes to uniform heating of the layer, and therefore of the liner as a whole. However, it has been found that these designs still do not provide uniform heating of the layer, as there is insufficient heat on the side of the layer remote from the heat source. According to the invention, liner conversion apparatus adapted to convert a flexible liner, including a layer of composite material comprising thermoplastics material and reinforcing fibres, into a structural member within a duct, comprises a front portion adapted to be inserted in the liner, a central portion having,; heating means on one side of the layer of composite material, and a rear portion having consolidation means for forcing the heated layer of composite material towards the duct for consolidation and cooling under pressure to form the structural member, the heating means producing pressurised hot gas, the central portion being so constructed and arranged to force the hot gas under pressure through the layer of composite material to heat the layer, and to provide an air gap on the opposite side of the layer of composite material while heating takes place, and to have a further heating means, which substantially surrounds the heating means and is on an opposite side of the composite layer to that of the heating means, comprises a tubular member spaced inward from the duct and substantially surrounding the heating means and the composite layer to provide a gap and arranged to deflect hot gas passing through the layer of composite material back towards the composite layer to ensure uniform heating of both the liner and composite material.

The air gap, as in WO 02/25156, contributes to the uniform heating of the layer, while the further heating means is another important factor. This further heating means aids the distribution of heat, by radiation and conduction, through the layer, so that the side of the layer remote from the heating means is also heated sufficiently.

Preferably the further heating means is a passive heating device. It is adapted to deflect the hot gas back towards the layer of composite material, so increasing heating efficiency. The passive heating device is also heated up by the gas, and so radiates heat onto the side of the layer remote from the heating means.

Alternatively, the further heating means may be an active heater, containing a heating element. The type of heating element and its operating temperature will be chosen to complement the heating by the gas, and to ensure that the air gap is maintained.

The central portion may have inner and outer members, one of which has the heating means, and the other the further heating means. The member with the further heating means may also act as support means to provide the air gap.

Conveniently the inner member has the heating means, so that the layer of composite material is heated from the inside, while the outer member comprises the further heating means. The outer member is preferably annular, surrounding and spaced from the inner member.

Alternatively, the outer member has the heating means, so that the layer of composite material is heated from the outside, while the inner member comprises the further heating means.

The hot gas may be directed from the air gap forwardly to provide pre-heating of the liner at the front portion.

The hot gas is preferably produced by heating a supply of compressed air. Unheated compressed air may then conveniently be used as the consolidation means forcing the heated layer of composite material into contact with the duct. The compressed air inflates a flexible bag means which acts on the layer of composite material. The flexible bag means may be attached to the central portion. Alternatively, it may be separate, and be expanded from the rear, unrolling as it does so. This has the advantage of reducing friction between the layer and the bag means.

The flexible bag may be of plastics such as PVC. Preferably, the bag is of silicon based material.

The liner may include an outer thermoplastics layer between the duct and the layer of composite material.

The apparatus is conveniently moved along the duct by being winched from its front portion. Compressed air and power for the heating means are supplied through lines attached to the apparatus. A mobile unit may conveniently generate the compressed air supply and the power, for example electricity, to operate the apparatus.

The invention is illustrated, by way of example, in the accompanying drawings, in which:
**Figure 1** shows in diagrammatic form the use of known apparatus for lining a duct with a liner having a layer of composite material;
**Figure 2** shows a longitudinal section through the known apparatus of Figure 1 which has internal heating means for the liner;
**Figure 3** is similar to Figure 2, but shows a known modification; and
**Figure 4** shows a longitudinal section through apparatus according to the invention.

Figure 1 illustrates known apparatus used for lining an underground duct, in this case a water mains pipe 1, with a liner 2 of fibre-reinforced composite material to form a structural member.

The liner 2 is initially flexible and includes an inner layer 3 of composite material comprising filaments of thermoplastic and filaments of reinforcing fibres, and an outer layer 4 of thermoplastics material. Each layer is formed as a tube. The preferred material for the inner layer 3 is one knitted, braided, woven (or otherwise matted together) from tows comprising substantially continuous filaments of a thermoplastic such as polypropylene and similarly continuous reinforcing fibres such as that available from Vetrotex International under the registered trade name TWINTEX. It is also possible to use shorter lengths of fibres connected together in any suitable way. For example, the short fibres may be matted together with a thermoplastic binder, stitched, needle punched or stapled. The inner layer 3 has air pockets between the filaments.

The apparatus comprises a robotic device 5 (commonly known as a pig) which is moved through a section of liner 2 previously inserted into the pipe 1. The device 5 has a front portion 6, a central portion 7 including heating means 8 and support means 9, and a rear portion 10 including consolidation means 11. The device 5 is pulled through the pipe 1 by a winch 12 operating a cable 13 attached to the front portion 6. The heating means 8 comprises an electrical element (or any other suitable heater) which heats compressed air, producing hot gas which is then applied to the inside of the layer 3 to melt the thermoplastic filaments. The support means 9 provide an air gap 14 on the outside of the inner layer 3 between the inner layer 3 and the outer layer 4. The electricity for the heating element 8 and the compressed air are supplied by a generator and compressor respectively formed into a mobile unit 15 which remains above ground, and is connected to the device by an umbilical 25 containing the electricity and air lines. The compressed air is also used for the consolidation means, which comprises a flexible bag 11 inflated by the compressed air, to press the heated inner layer 3 and the outer layer 4 against the internal wall of the pipe 1. On cooling, the liner 2 forms a structural member within the pipe 1. The mobile unit 15 also includes a programmable process control unit to control operation of the various parts. The apparatus shown will normally reline about 100m of pipe in a single run.

Figure 2 shows the device 5 and the liner 2 in more detail. When the liner 2 is inserted in the pipe 1, it tends to fold up towards the lowest point of the pipe. As the device 5 travels along, the outer layer 4 is first pressed against the pipe, followed by the inner layer 3.

The front portion 6 of the device 5 comprises a spherical nose 16 having an eye 17 to which the winch cable 13 is attached. Movement of the nose 16 opens up the inner layer 3. The heating element 8 is attached to the rear of the nose 16, and is of smaller diameter, so that a gap opens up between the heating element 8 and the inside of the inner layer 3. The hot gas (typically between 180°C and 200°C) produced by the heating element 8 is under pressure, and is forced through the inner layer 3, by the pressure differential across the inner layer 3, between the higher pressure inside surface and the lower pressure air gap 14 on the outside surface. The hot gas drives out the air in the air pockets, thus heating the layer 3 from the inside. The hot gas reaches the lower pressure air gap 14 on the outside of the inner layer 3. The air gap 14 is provided by the support means 9, which also serves to direct the gas forwardly over the nose 16. The gas, which is still warm, serves to pre-heat the inner and outer layers 3, 4.

The support means 9 comprises an annular member 30 surrounding the nose 16 and heating element 8, to guide the inner layer 3 and maintain the air gap 14 during heating. The annular member 30 has an enlarged forward end 31 round the spherical nose 16, and a tubular rearward end 32 round the heating element 8.

At the rear portion 10 the inflatable bag 11 (shown uninflated), which is for example of silicone rubber, is attached to the rear of the heating element 8. When filled with compressed air at a suitable pressure, the bag 11 forces the hot inner layer 3 against the outer layer 4 and the pipe 1, to consolidate and cool it under pressure to form a structural member.

Thus, in use, the liner 2 is first inserted into the pipe 1, perhaps by winching. The device 5 is then inserted into the liner 2, ensuring that the inner layer 3 is between the nose 16 and the member 30, and that the outer layer 4 is radially outside the member 30. The device 5 is then operated by the control unit to supply compressed air to the heating element 8, to provide hot gas under pressure to heat the inner layer 3, and then to inflate the bag 11, and operate the winch 12 to pull the device 5 along the pipe 1. The control unit controls the gas temperatures and air pressures, and the velocity of the device.

With the device 5 in an initial position the hot gas directed over the nose 16 preheats an initial portion of the liner 2 and urges the outer layer 4 against the pipe 1. The hot gas also heats the thermoplastics filaments of the inner layer 3 quite uniformly, because the pressure differential as a result of the air gap 14 drives the hot gas through the thickness of the layer 3, replacing the air in the air pockets with hot gas. The thermoplastics filaments therefore melt and the molten plastics surrounds the reinforcing fibres. The device moves along a predetermined length, whereupon the bag 11 is inflated to press the hot inner layer 3 and the warm outer layer 4 against the pipe 1. The molten plastics of the inner layer 3 mixes intimately with the reinforcing fibres, as part of the consolidation of the layers, which then cool and harden under pressure to form a structural member. While the bag 11 is consolidating the initial portion of the liner, the hot gas is heating the next portion, and so the process continues.

Figure 3 shows a known modification of the embodiment of Figure 2. In Figure 3 the front portion 6 of the device comprises a toroidal end cap 33 with the eye 17 to which the winch cable 13 is attached. The heating element 8 extends between the end cap 33 and the bag 11. The support means 9 comprises a perforated frusto-conical member 34 also attached between the cap 33 and the bag 11. The diameter of the member 34 increases from front to rear, and the inner layer 3 is guided along the outer surface of it. It has been found that the member 34 forms a guide for the inner layer 3, ensuring that the air gap 14 is maintained between the inner layer 3 and the pipe 1 during heating. It also opens the inner layer 3 up gradually as it is heated, so that consolidation is more efficient. Otherwise the construction and operation of the embodiment of Figure 3 are the same as those of Figure 2.

Figure 4 shows the apparatus according to the invention, with the further heating means. Figure 4 is a modification of Figure 2, and corresponding reference numerals have been applied to corresponding parts.

In the apparatus of Figure 4 the nose 16 of the front portion 6 is not spherical but bell-shaped and the eye 17 is not shown. The heating means 8 is attached at one end to the rear of the nose 16, and at its other end to a tail 40 which carries the bag 11.

The heating means 8 is of smaller diameter than the nose 16, which includes an axial passage 41 which forms an inlet for the air, and also carries the powerlines for the heating element 8. A porous membrane 42 extends between the nose 16 and tail 40 round the heating element 8, to keep the inner layer 3 away from the heating element 8.

A further heating means 43 in the form of a passive heater element 44 is provided round the heating element 8. The passive element 44 comprises a tubular member of metal, defining an annular gap 45 between the membrane 42 and the element 44, through which the inner layer 3 passes. The forward end of the tubular member has several circumferentially spaced guide members 46, which serve to guide the inner layer 3 into the gap 45.

The gap 45 is relatively small, so that the element 44 serves to deflect hot gas passing through the inner layer 3 back towards the inner layer 3 to reduce heat loss and increase heating efficiently. The element 44 is also heated by the gas, and then radiates heat onto the outside of the inner layer 3 which also heats the outside of the inner layer 3.

The air gap 14 is defined between the passive element 44 and the pipe 1, so that the advantage provided by the air gap 14 in contributing to the uniform heating of the layer 3 is maintained.

It will be appreciated that the passive element 44 could, if desired, itself have an active element. Similarly, in another modification (not shown), the heating elements could be reversed, so that the inner layer 3 is heated primarily from the outside, and not the inside.

## Claims

1. Liner conversion apparatus adapted to convert a flexible liner (2), including a layer of composite material (3) comprising thermoplastics material and reinforcing fibres, into a structural member within a duct (1), comprises a front portion (6) adapted to be inserted in the liner (2), a central portion (7) having heating means (8) on one side of the layer of composite material (3), and a rear portion (10) having consolidation means (11) for forcing the heated layer of composite material (3) towards the duct (1) for consolidation and cooling under pressure to form the structural member, the heating means (8) producing pressurised hot gas, the central portion (7) being so constructed and arranged to force the hot gas under pressure through the layer of composite material (3) to heat the layer, and to provide an air gap (14) on the opposite side of the layer of composite material (3) while heating takes place, **characterised in that** a further heating means (43), which substantially surrounds the heating means (8) and is on an opposite side of the composite layer (3) to that of the heating means (8), comprises a tubular member spaced inward from the duct and substantially surrounding the heating means (8) and the composite layer (3) to provide a gap and arranged to deflect hot gas passing through the layer of composite material back towards the composite layer to ensure uniform heating of both the liner (2) and composite material (3).

2. Liner conversion apparatus according to claim 1, **characterised in that** the further heating means (43) is a passive heating device.

3. Liner conversion apparatus according to claim 1, **characterised in that** the further heating means (43) is an active heater, containing a heating element.

4. Liner conversion apparatus according to any preceding claim, **characterised in that** the central portion (7) has inner and outer members, one of which has the heating means (8), and the other the further heating means (43).

5. Liner conversion apparatus according to claim 4, **characterised in that** the member with the further heating means (43) also acts as support means (9) to provide the air gap (14).

6. Liner conversion apparatus according to claim 4 or claim 5, **characterised in that** the inner member has the heating means (8), so that the layer of composite material (3) is heated from the inside, while the outer member comprises the further heating means (43).

7. Liner conversion apparatus according to any of claims 4 to 6, **characterised in that** the outer member is annular, surrounding and spaced from the inner member.

8. Liner conversion apparatus according to claim 4, **characterised in that** the outer member has the heating means (8), so that the layer of composite material (3) is heated from the outside, while the inner member comprises the further heating means (43).

9. Liner conversion apparatus according to any preceding claim, **characterised in that** the hot gas is directed from the air gap forwardly to provide pre-heating of the liner (2) at the front portion (6).

10. Liner conversion apparatus according to any preceding claim, **characterised in that** the hot gas is produced by heating a supply of compressed air.

11. Liner conversion apparatus according to any preceding claim, **characterised in that** unheated compressed air is used as the consolidation means (11) forcing the heated layer of composite material into contact with the duct (1).

12. Liner conversion apparatus according to any preceding claim, **characterised in that** the compressed air inflates a flexible bag means (11) which acts on the layer of composite material (3).

13. Liner conversion apparatus according to claim 12, **characterised in that** the flexible bag means (11) is attached to the central portion (7).

14. Liner conversion apparatus according to claim 12, **characterised in that** the flexible bag (11) is expanded from the rear, unrolling as it does so.

15. Liner conversion apparatus according to any of claims 12 to 14, **characterised in that** the flexible bag (11) is of plastics.

16. Liner conversion apparatus according to claim 15, **characterised in that** the flexible bag (11) is of PVC.

17. Liner conversion apparatus according to claim 12 to 14, **characterised in that** the bag (11) is of silicon based material.

18. Liner conversion apparatus according to any preceding claim, **characterised in that** the liner conversion apparatus is adapted to a flexible liner (2) that includes an outer thermoplastics layer (4) between the duct (1) and the layer of composite material (3).

19. Liner conversion apparatus according to any preceding claim, **characterised in that** the apparatus is moved along the duct (1) by being winched from its front portion (6).

20. Liner conversion apparatus according to any preceding claim, **characterised in that** compressed air and power for the heating means (8) are supplied through lines (25) attached to the apparatus.

21. Liner conversion apparatus according to any preceding claim, **characterised in that** a mobile unit (15) generates the compressed air supply and the power, for example electricity, to operate the apparatus.

## Patentansprüche

1. Auskleidungs-Umformvorrichtung, ausgebildet zum Umformen einer flexiblen Auskleidung (2), die eine Schicht aus thermoplastisches Material und Verstärkungsfasern enthaltendem Verbundstoff (3) enthält, in ein Strukturelement innerhalb einer Rohrleitung (1), umfassend einen Frontteil (6), ausgebildet zum Einführen in die Auskleidung (2), einen Mittelteil (7) mit einer Heizeinrichtung (8) auf einer Seite der Schicht aus Verbundstoff (3), und einen rückwärtigen Teil (10) mit einer Verfestigungseinrichtung (11) zum Drängen der erhitzten Schicht aus Verbundstoff (3) in Richtung der Rohrleitung (1) zur Verfestigung und Abkühlung unter Druck, um das Strukturelement zu bilden, wobei die Heizeinrichtung (8) unter Druck stehendes Heißgas erzeugt, der Mittelteil (7) derart konstruiert und angeordnet ist, dass er das Heißgas unter Druck durch die Schicht aus Verbundstoff (3) drängt, um die Schicht zu erhitzen, und um einen Luftspalt (14) auf der gegenüberliegenden Seite der Schicht aus Verbundstoff (3) vorzusehen, während die Erhitzung vonstatten geht, **dadurch gekennzeichnet, dass** eine weitere Heizeinrichtung (43), welche die Heizeinrichtung (8) im wesentlichen umgibt und sich auf einer abgewandten Seite der Verbundmaterialschicht (3) bezüglich der Heizeinrichtung (8) befindet, ein rohrförmiges Element aufweist, welches gegenüber der Rohrleitung nach innen beabstandet ist und die Heizeinrichtung (8) und die Verbundmaterialschicht (3) im wesentlichen umgibt, um einen Spalt zu schaffen, ferner ausgebildet zum Ablenken von Heißgas, welches durch die Schicht aus Verbundstoff gelangt, nach hinten in Richtung der Verbundstoffschicht, um eine gleichmäßige Erhitzung sowohl der Auskleidung (2) als auch des Verbundstoffs (3) zu gewährleisten.

2. Auskleidungs-Umformvorrichtung nach Anspruch 1, **dadurch gekennzeichnet, dass** die weitere Heizeinrichtung (43) eine passive Heizeinrichtung ist.

3. Auskleidungs-Umformvorrichtung nach Anspruch 1, **dadurch gekennzeichnet, dass** die weitere Heizeinrichtung (43) ein aktiver Heizer ist, der ein Heizelement enthält.

4. Auskleidungs-Umkormvorrichtung nach einem vorhergehenden Anspruch, **dadurch gekennzeichnet, dass** der Mittelteil (7) ein Innenelement und ein Außenelement aufweist, von denen eines die Heizeinrichtung (8) und das andere die weitere Heizeinrichtung (43) aufweist.

5. Auskleidungs-Umformvorrichtung nach Anspruch 4, **dadurch gekennzeichnet, dass** das Element mit der weiteren Heizeinrichtung (43) auch als Trägereinrichtung (9) zur Schaffung des Luftspalts (14) fungiert,

6. Auskleidungs-Umformvorrichtung nach Anspruch 4 oder Anspruch 5, **dadurch gekennzeichnet, dass** das innere Element die Heizeinrichtung (8) aufweist, so dass die Schicht aus Verbundstoff (3) von innen her erhitzt wird, während das äußere Element die weitere Heizeinrichtung (43) aufweist.

7. Auskleidungs-Umformvorrichtung nach einem der Ansprüche 4 bis 6, **dadurch gekennzeichnet, dass** das Außenelement ringförmig ist, das innere Element umgibt und von diesem beabstandet ist

8. Auskleidungs-Umformvorrichtung nach Anspruch 4, **dadurch gekennzeichnet, dass** das äußere Element die Heizeinrichtung (8) aufweist, so dass die Schicht aus Verbundstoff (3) von außen her erhitzt wird, während das innere Element die weitere Hefzeinrichtung (43) aufweist.

9. Auskleidungs-Umformvorrichtung nach einem vorhergehenden Anspruch, **dadurch gekennzeichnet, dass** das Heißgas von dem Luftspalt nach vom gelenkt wird, um eine Voraufheizung der Auskleidung (2) an dem Frontteil (6) zu erreichen.

10. Auskleidungs-Umformvorrichtung nach einem vorhergehenden Anspruch, **dadurch gekennzeichnet, dass** das Heißgas durch Erhitzen einer Druckluft-Zufuhr erzeugt wird.

11. Auskleidungs-Umformvorrichtung nach einem vorhergehenden Anspruch, **dadurch gekennzeichnet, dass** die nicht erhitzte Druckluft als Verfestigungseinrichtung (11) verwendet wird, welche die erhitzte Schicht aus Verbundstoff in Berührung mit der Rohrleitung (1) zwingt

12. Auskleidungs-Umformvorrichtung nach einem vorhergehenden Anspruch, **dadurch gekennzeichnet, dass** die Druckluft eine flexible Beuteleinrichtung (11) aufbläst, die auf die Schicht aus Verbundstoff (3) einwirkt.

13. Auskleldungs-Umformvorrichtung nach Anspruch 12, **dadurch gekennzeichnet, dass** die flexible Beuteleinrichtung (11) an dem Mittelteil (7) befestigt ist.

14. Auskleldungs-Umformvorrichtung nach Anspruch 12, **dadurch gekennzeichnet, dass** der flexible Beutel (11) von der Rückseite her erweitert wird, wobei er sich abroilt.

15. Auskleldungs-Umformvorrichtung nach einem der Ansprüche 12 bis 14, **dadurch gekennzeichnet, dass** der flexible Beutel (11) aus Kunststoff besteht.

16. Auskleidungs-Umformvorrichtung nach Anspruch 15, **dadurch gekennzeichnet, dass** der flexible Beutel (11) aus PVC besteht

17. Auskleidungs-Umformvorrichtung nach Anspruch 12 bis 14, **dadurch gekennzeichnet, dass** der Beutel (11) aus einem Werkstoff auf Siliciumbasis besteht.

18. Auskleidungs-Umformvorrichtung nach einem vorhergehenden Anspruch, **dadurch gekennzeichnet, dass** die Vorrichtung an eine flexible Auskleidung (2) angepasst ist, die eine äußere Thermoplastschicht (4) zwischen der Rohrleitung (1) und der Schicht aus Verbundmaterial (3) enthält.

19. Auskleidungs-Umformvorrichtung nach einem vorhergehenden Anspruch, **dadurch gekennzeichnet, dass** die Vorrichtung entlang der Rohrleitung (1) durch Ziehen von ihrem Vorderteil (6) her bewegt wird.

20. Auskleidungs-Umformvorrichtung nach einem vorhergehenden Anspruch, **dadurch gekennzeichnet, dass** Druckluft und Leistung für die Heizeinrichtung (8) über an der Vorrichtung angebrachten Leitungen (25) zugeführt werden.

21. Auskleidungs-Umformvorrichtung nach einem vorhergehenden Anspruch, **dadurch gekennzeichnet, dass** eine mobile Einheit (15) die Druckluftzufuhr und die Leistung, beispielsweise Elektrizität, zum Betreiben der Vorrichtung generiert.

## Revendications

1. Appareil de conversion de revêtement intérieur adapté pour convertir un revêtement intérieur souple (2), comportant une couche de matériau composite (3) comprenant une matière thermoplastique et des fibres de renforcement, en un élément structurel à l'intérieur d'une conduite (1), qui comprend une partie avant (6) adaptée pour être insérée dans le revêtement intérieur (2), une partie centrale (7) comportant un moyen de chauffage (8) sur un côté de la couche de matériau composite (3) et une partie arrière (10) comportant un moyen de consolidation (11) pour forcer la couche de matériau composite chauffée (3) à aller vers la conduite (1) pour sa consolidation et son refroidissement sous pression pour former l'élément structurel, le moyen de chauffage (8) produisant un gaz chaud sous pression, la partie centrale (7) étant conçue et disposée de manière à forcer le gaz chaud sous pression à passer à travers la couche de matériau composite (3) pour chauffer la couche, et à fournir un intervalle d'air (14) sur le côté opposé de la couche de matériau composite (3) pendant que le chauffage a lieu, **caractérisé en ce qu'**un moyen de chauffage supplémentaire (43), qui entoure substantiellement le moyen de chauffage (8) et qui est sur un côté opposé de la couche composite (3) à celui du moyen de chauffage (8), comprend un élément tubulaire espacé à l'intérieur de la conduite et entourant substantiellement le moyen de chauffage (8) et la couche composite (3) pour fournir un intervalle et adapté pour dévier le gaz chaud passant à travers la couche de matériau composite afin de le renvoyer vers la couche composite pour assurer un chauffage uniforme du revêtement intérieur (2) et du matériau composite (3).

2. Appareil de conversion de revêtement intérieur selon la revendication 1, **caractérisé en ce que** le moyen de chauffage supplémentaire (43) est un dispositif chauffant passif.

3. Appareil de conversion de revêtement intérieur selon la revendication 1, **caractérisé en ce que** le moyen de chauffage supplémentaire (43) est un dispositif de chauffage actif, contenant un élément chauffant.

4. Appareil de conversion de revêtement intérieur selon l'une quelconque des revendications précédentes, **caractérisé en ce que** la partie centrale (7) a des éléments intérieur et extérieur, l'un d'entre eux comportant le moyen de chauffage (8), et l'autre le moyen de chauffage supplémentaire (43).

5. Appareil de conversion de revêtement intérieur selon la revendication 4, **caractérisé en ce que** l'élément comportant le moyen de chauffage supplémentaire (43) agit aussi comme moyen de support (9) pour fournir l'intervalle d'air (14).

6. Appareil de conversion de revêtement intérieur selon la revendication 4 ou 5, **caractérisé en ce que** l'élément intérieur comporte le moyen de chauffage (8), de sorte que la couche de matériau composite (3) est chauffée de l'intérieur, tandis que l'élément extérieur comprend le moyen de chauffage supplémentaire (43).

7. Appareil de conversion de revêtement intérieur selon l'une quelconque des revendications 4 à 6, **caractérisé en ce que** l'élément extérieur est annulaire, et entoure l'élément intérieur en étant espacé de celui-ci.

8. Appareil de conversion de revêtement intérieur selon la revendication 4, **caractérisé en ce que** l'élément extérieur comporte le moyen de chauffage (8), de sorte que la couche de matériau composite (3) est chauffée de l'extérieur, tandis que l'élément intérieur comprend le moyen de chauffage supplémentaire (43).

9. Appareil de conversion de revêtement intérieur selon l'une quelconque des revendications précédentes, **caractérisé en ce que** le gaz chaud est dirigé vers l'avant depuis l'intervalle d'air pour fournir un préchauffage du revêtement intérieur (2) dans la partie avant (6).

10. Appareil de conversion de revêtement intérieur selon l'une quelconque des revendications précédentes, **caractérisé en ce que** le gaz chaud est produit en faisant chauffer une alimentation d'air comprimé.

11. Appareil de conversion de revêtement intérieur selon l'une quelconque des revendications précédentes, **caractérisé en ce que** de l'air comprimé non chauffé est utilisé comme moyen de consolidation (11) qui oblige la couche de matériau composite chauffée à entrer en contact avec la conduite (1).

12. Appareil de conversion de revêtement intérieur selon l'une quelconque des revendications précédentes, **caractérisé en ce que** l'air comprimé gonfle un moyen formant sac souple (11) qui agit sur la couche de matériau composite (3).

13. Appareil de conversion de revêtement intérieur selon la revendication 12, **caractérisé en ce que** le moyen formant sac souple (11) est fixé à la partie centrale (7).

14. Appareil de conversion de revêtement intérieur selon la revendication 12, **caractérisé en ce que** le sac souple (11) est gonflé par l'arrière, en se déroulant.

15. Appareil de conversion de revêtement intérieur selon l'une quelconque des revendications 12 à 14, **caractérisé en ce que** le sac souple (11) est en plastique.

16. Appareil de conversion de revêtement intérieur selon la revendication 15, **caractérisé en ce que** le sac souple (11) est en PVC.

17. Appareil de conversion de revêtement intérieur selon la revendication 12 ou 14, **caractérisé en ce que** le sac (11) est fait d'un matériau à base de silicone.

18. Appareil de conversion de revêtement intérieur selon l'une quelconque des revendications précédentes, **caractérisé en ce que** l'appareil de conversion de revêtement intérieur est adapté à un revêtement intérieur souple (2) qui comprend une couche thermoplastique extérieure (4) entre la conduite (1) et la couche de matériau composite (3).

19. Appareil de conversion de revêtement intérieur selon l'une quelconque des revendications précédentes, **caractérisé en ce que** l'appareil est déplacé le long de la conduite (1) en étant treuillé par sa partie avant (6).

20. Appareil de conversion de revêtement intérieur selon l'une quelconque des revendications précédentes, **caractérisé en ce que** l'air comprimé et l'énergie pour le moyen de chauffage (8) sont fournis par des conduites (25) reliées à l'appareil.

21. Appareil de conversion de revêtement intérieur selon l'une quelconque des revendications précédentes, **caractérisé en ce qu'**une unité mobile (15) produit l'alimentation en air comprimé et l'énergie, par exemple de l'électricité, pour faire fonctionner l'appareil.
